# FASCICULE DE BREVET EUROPEEN

(11) **EP 2 178 016 B1**
(45) Date de publication et mention de la délivrance du brevet: **07.03.2018**
(21) Numéro de dépôt: 09290805.2
(22) Date de dépôt: 20.10.2009
(51) Int. Cl.: G06F 21/31, G06F 21/57, H04L 9/08, H04L 9/32, H04L 29/06

(54) **Procédé de fonctionnement d'un équipement embarqué, équipement associé et aéronef comprenant un tel équipement**
Betriebsverfahren eines Bordsystems, entsprechendes Gerät und mit einem solchen Gerät ausgestattetes Luftfahrzeug
Method of operating on-board equipment, associated equipment and aircraft containing such equipment

(30) Priorité: 20.10.2008 FR 0857125
(43) Date de publication de la demande: 21.04.2010
(73) Titulaire: Airbus Operations, 31060 Toulouse (FR)
(72) Inventeur: Chopart, Stéphane, 31340 Vacquiers (FR)
(74) Mandataire: Santarelli

(56) Documents cités:
- DE-A1- 10 128 305
- US-A1- 2004 025 021
- US-A1- 2005 039 006
- US-A1- 2008 172 740
- R.V. ROBINSON; ET AL.: "Challenges for IT Infrastructure Supporting Secure Network-Enabled Commerical Airplaine Operations", AIAA INFOTECH@AEROSPACE CONFERENCE, [Online] 2007, XP007908347, Extrait de l'Internet: URL:http://citeseerx.ist.psu.edu/viewdoc/d ownload?doi=10.1.1.102.2406&rep=rep1&type= pdf> [extrait le 2009-04-24]
- R. ROBINSON; ET AL: "Impact of Public Key Enabled Applications on the Operation and Maintenance of Commercial Airplanes", AIAA AVIATION TECHNOLOGY INTEGRATION, AND OPERATIONS (ATIO) CONFERENCE,, [Online] 20 septembre 2007 (2007-09-20), XP007908365, Extrait de l'Internet: URL:http://www.ee.washington.edu/research/ nsl/papers/ATIO-07.pdf> [extrait le 2009-04-24]

## Description

La présente invention se rapporte aux équipements embarqués dans des véhicules et plus particulièrement à un procédé de fonctionnement d'un tel équipement embarqué comprenant un micrologiciel embarqué qui est exécuté pour réaliser au moins un traitement sécurisé à l'aide de données sensibles de sécurité.

Les équipements embarqués dans des véhicules présentent traditionnellement une partie matérielle, également dite *"hardware",* et une partie logicielle composée de logiciels, ou "*software*", exécutés par la partie matérielle. On identifie ces différents composants matériels et logiciels par un numéro d'identification, ou *part number,* notamment dans le domaine aéronautique.

Les composants matériels peuvent contenir des logiciels de base, tels le BIOS, un système d'exploitation ou une séquence d'amorçage ("*boot*" selon la terminologie anglo-saxonne).

Ces logiciels sont généralement de bas niveau applicatif et intégrés dans une mémoire morte. Toute modification de ceux-ci est considérée comme une intervention *"matérielle"* sur le composant affecté et nécessite un nouveau cycle de certification, car le nouveau code logiciel est susceptible de modifier le fonctionnement de l'équipement et doit à cet égard être vérifié et validé. On qualifie cette modification de *"modification matérielle*".

En raison du caractère coûteux en termes économiques et temporels d'un nouveau cycle de certification du matériel, une telle modification matérielle est considérée comme pénalisante en terme d'opérabilité et de coûts.

Il est ainsi couramment prévu de n'intégrer à un composant matériel que le code exécutable logiciel qui est supposé ne pas évoluer, ou très peu évoluer, pendant la durée de vie du véhicule. Ce code logiciel intégré à la partie matérielle est également appelé micrologiciel ou *firmware* selon un anglicisme largement répandu. Des expressions *"logiciel interne", "logiciel embarqué*" ou *"logiciel d'exploitation"* sont également utilisées pour désigner ce micrologiciel.

On résume généralement un micrologiciel à l'association d'un logiciel d'amorçage (*"Boot software*" selon la terminologie anglo-saxonne) permettant le démarrage de l'équipement et d'un logiciel résident ("*Resident software*" selon la terminologie anglo-saxonne) comprenant quelques fonctions basiques. Ces deux éléments du micrologiciel sont exécutés successivement lors de la mise en route de l'équipement les intégrant.

On s'intéresse, pour l'invention, à un micrologiciel apte à réaliser un traitement sécurisé par l'utilisation de données sensibles de sécurité.

A titre d'exemple dans le domaine aéronautique, un micrologiciel est réduit au strict minimum et n'inclut que des fonctions de communication et de chargement de données. Ces fonctions permettent de charger, depuis un chargeur de données ou un serveur de chargement en réseau, des données de fonctionnement (logicielles, applicatives et/ou des données brutes) qui procurent à l'équipement embarqué les fonctionnalités auxquelles il est dédié.

Ces données sont généralement compilées et regroupées sous forme de fichiers ou blocs téléchargeables sur aéronef conformes à une norme prévue pour l'aviation civile. Ces fichiers ou blocs que le micrologiciel charge peuvent être nommés indifféremment "*loads*".

Afin de ne pas compromettre le fonctionnement de l'aéronef, les fichiers à télécharger sont sécurisés par des signatures électroniques (ou numériques), par exemple à l'aide d'une infrastructure à clés publiques (PKI) qui permet de vérifier leur authenticité.

L'utilisation d'une infrastructure PKI et de clés asymétriques correspondantes est rendue nécessaire, pour une utilisation aéronautique par exemple, du fait de la pluralité d'intervenants dans l'exploitation d'un type d'aéronef: nombreux éditeurs de fichiers, nombreuses compagnies aériennes recevant ces fichiers, etc. Des infrastructures à clés symétriques n'auraient pas pu convenir car ces clés auraient été partagées par un trop grand nombre de personnes.

Les fichiers à charger, et notamment leurs signatures numériques, sont alors vérifiés par l'équipement embarqué avant d'effectuer leur téléchargement dans l'aéronef.

La demande de brevet FR 2 912 578 décrit notamment des mécanismes de signature numérique adaptés au domaine aéronautique.

Toutefois, pour permettre une certaine souplesse d'utilisation de ces mécanismes de signature telle qu'une mise à jour, les outils nécessaires à ces vérifications (clés électroniques, logiciels de vérification de signature associés) sont intégrés dans un ou plusieurs fichiers à télécharger, dit "de configuration". Ce(s) fichier(s) constitue les premières données chargées dans l'équipement embarqué puisqu'il est nécessaire pour le chargement des autres fichiers. On désigne ce(s) fichier(s) initial de configuration de l'équipement embarqué ainsi comme étant le "premier" fichier à télécharger ou "premier *load* de configuration". Pour des raisons de sécurité évidentes du système, ce premier fichier est également sécurisé.

La vérification de ce premier "*load*" constitue cependant une difficulté car l'équipement embarqué est, à ce moment, limité, en termes de fonctionnalités, au simple logiciel résident.

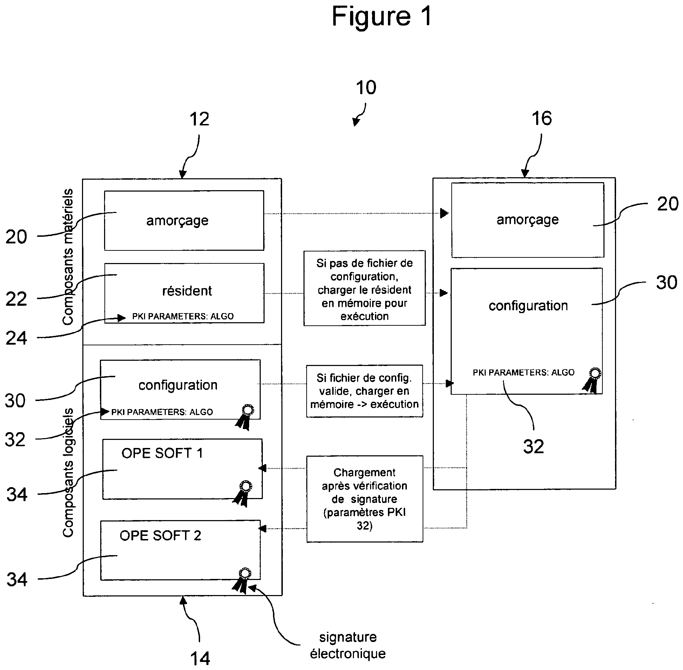

En référence à la **figure 1**, on illustre le processus actuel de chargement des fichiers à télécharger dans des aéronefs en service.

L'équipement embarqué 10, qui peut être un équipement avionique par exemple, comprend, entre autres, un ensemble de composants matériels doté d'un micrologiciel 12, et des logiciels ou données stockées au fur et à mesure de leur téléchargement dans une mémoire 14 de stockage, et une mémoire vive 16, par exemple de type SDRAM, pour l'exécution des logiciels par des moyens d'exécution de l'équipement embarqué 10.

Lors du démarrage de l'équipement embarqué 10, la séquence d'amorçage 20 du micrologiciel 12 est chargée dans la mémoire vive 16 puis est exécutée pour vérifier l'état de l'équipement embarqué.

Si les premières données de configuration, c'est-à-dire le "premier *load de configuration*" 30, ne sont pas présentes dans la mémoire de stockage 14 de l'équipement embarqué 10, la séquence d'amorçage 20 lance l'exécution du logiciel résident 22, qui est, à son tour, chargé en mémoire vive 16.

Le logiciel résident 22 comprend, dans son code binaire, des outils cryptologiques 24 de type infrastructure à clés publiques, notamment pour vérifier la signature du premier "*load de configuration"* 30 qui contient les données sensibles (paramètres PKI) pour vérifier les autres fichiers à télécharger 34. Ces outils sont notamment un certificat racine, un algorithme de hachage, un algorithme de signature et un code logiciel binaire de vérification de signature électronique. Le logiciel résident 22 comprend également des outils de communication avec un chargeur de données centralisé (non représenté), par exemple au travers d'un réseau de communication, à partir duquel l'équipement 10 peut récupérer les fichiers à télécharger.

Le premier "*load de configuration"* 30 signé conformément à une infrastructure à clés publiques PKI est ainsi vérifié par le logiciel résident 24, selon des mécanismes classiques de vérification de signature PKI. Ce premier fichier de configuration n'est chargé en mémoire de stockage 14 qu'après vérification positive, c'est-à-dire lorsque l'origine et l'intégrité du fichier sont correctes.

Disposant du premier "*load de configuration"* 30 et donc des outils 32 de vérification de la signature des autres fichiers à télécharger 34, notamment des paramètres PKI (certificats, algorithmes) et logiciels correspondants, l'équipement embarqué 10 procède à la vérification des fichiers suivants 34 et au chargement de ceux-ci en mémoire 14 depuis le chargeur de données, lorsque la vérification, à l'aide des paramètres PKI du premier "*load*" 30, est positive.

Ces autres fichiers téléchargés 34 comprennent diverses applications ou données de fonctionnement pour l'équipement 10.

Dans cette configuration, les données sensibles, ici les paramètres PKI pour le traitement sécurisé de vérification du premier fichier de configuration à télécharger, sont contenues dans le code binaire du logiciel résident 22.

Lors des démarrages suivants de l'équipement embarqué, ce dernier lance l'exécution de la séquence d'amorçage 20 et vérifie la présence du premier fichier de configuration 30 en mémoire morte 14. Comme le premier fichier de configuration de l'équipement 10 est présent (chargé lors du premier démarrage de l'équipement 10), le logiciel résident 22 est ignoré.

Les paramètres PKI et les outils logiciels 32 nécessaires à la vérification de la signature électronique des fichiers suivants 34 sont chargés en mémoire SDRAM 16 à partir des données du premier fichier de configuration 30 stocké en mémoire morte 14. Le téléchargement des fichiers suivants 34 depuis le chargeur de données est identique au processus décrit en ci-dessus.

Les paramètres PKI nécessaires à la vérification des fichiers sont cependant susceptibles d'évoluer dans le temps, par exemple pour les raisons suivantes :
- un certificat racine à une durée de vie limitée, souvent de vingt ans nettement inférieure à la durée de vie d'un aéronef embarquant l'équipement 10;
- les algorithmes subissent des attaques mathématiques qui peuvent être mise en oeuvre grâce à l'augmentation des puissances de calcul. On fait donc évoluer ces algorithmes en fonction des avancées de la cryptanalyse.

La solution de signature électronique des fichiers de fonctionnement va ainsi connaître plusieurs versions successives: N, N+1, etc.

Pour faciliter les migrations d'une version à une autre, une période de transition est, lorsque cela est possible, décidée pour une durée de quelques mois ou années. Durant cette période, les versions de signature N et N+1 cohabitent. A l'issue de cette période, la version N est interdite d'utilisation car considérée comme non sûre :
- les fichiers initiaux signés N ne doivent plus être utilisés en raison de la perte de confiance totale pour les signatures en version antérieure,
- seuls de nouveaux fichiers signés N+1 peuvent être générés et doit être utilisés.

Lorsque cette évolution affecte les outils de vérification de signature 32 utilisés pour le chargement des fichiers suivants 34, une mise à jour du premier fichier de configuration 30 dans l'équipement embarqué 10 est menée par téléchargement d'un nouveau fichier correctif 30' signé N (appelé également "*patch*") contenant les nouveaux paramètres PKI.

Les fichiers suivants 34, signés avec la nouvelle version de signature N+1, peuvent être vérifiés, grâce aux nouveaux paramètres PKI du fichier de configuration 30' mis à jour par patch, avant d'être installés dans l'équipement embarqué 10.

En cas de remise à zéro de l'équipement embarqué 10 entraînant l'effacement du premier fichier de configuration 30 de la mémoire 14, un nouveau premier fichier de configuration 30 comprenant les outils de vérification 32 en version N+1 doit être disponible auprès du chargeur de données.

Lorsque l'évolution des mécanismes de signature électronique affecte les outils de vérification de signature 24 utilisés pour le chargement du premier fichier de configuration 30, le nouveau premier fichier de configuration 30 à charger et destiné à l'équipement embarqué 10 est désormais signé en version N+1.

Or, le logiciel résident 22 comprend, dans son code binaire, uniquement les paramètres PKI permettant de vérifier une signature du fichier de configuration 30 en version N.

Dans cette configuration, lorsque l'équipement embarqué 10 est remis à zéro et que le premier fichier de configuration 30 doit être à nouveau chargé, le vérification de ce premier fichier ne peut aboutir pour incompatibilité des versions de signature. Le téléchargement de celui-ci 30 et des fichiers suivants 34 est par conséquent bloqué.

La configuration matérielle de l'équipement 10 doit donc être modifiée pour intégrer les paramètres PKI en version N+1 au niveau du logiciel résident 22. Comme évoqué ci-dessus, cette évolution ou mise à jour des paramètres PKI 24 modifie le code logiciel embarqué et nécessite un nouveau cycle de certification de l'équipement 10, et par voie de conséquence, généralement une dépose et un retour chez le fournisseur de l'équipement 10.

On connaît également, de la publication DE 101 28 305, une unité de contrôle mémorisant des données de programme de contrôle, disposant d'un dispositif de vérification et de lignes de données avec l'extérieur. Ces lignes de données sont susceptibles d'être utilisées par un dispositif externe pour reprogrammer l'unité de contrôle.

Le dispositif de vérification conduit un contrôle d'autorisation, type « watchdog », sur chaque mot de données reçu d'un dispositif externe au travers de ces lignes de données.

En cas d'autorisation, le mot de données peut alors être écrit en mémoire, conduisant notamment à l'écrasement des programmes ou données stockés dans l'unité de contrôle.

On connaît également le document US 2004/025021 qui décrit la mise à jour d'une clé de transfert d'une cryptographie à clé publique à l'intérieur d'une carte à puce, à partir d'une clé de transfert contenu dans une seconde carte à puce.

D'une façon générale, lorsqu'un équipement embarqué comprend un micrologiciel apte à réaliser un traitement sécurisé et que ce micrologiciel intègre les données sensibles de sécurité utilisées par ce traitement, il est nécessaire de procéder à une nouvelle certification de l'équipement lorsque l'on souhaite faire évoluer ces données sensibles.

La présente invention vise à résoudre cet inconvénient en prévoyant d'héberger de façon sécurisée ces données sensibles sur un module sécurisé adapté.

A cet effet, l'invention a trait notamment à un procédé de fonctionnement d'un équipement embarqué comme défini dans la revendication 1. L'équipement embarqué comporte notamment un micrologiciel apte à être exécuté lors de la mise en route de l'équipement embarqué pour réaliser un traitement sécurisé par l'utilisation de données sensibles de sécurité, le procédé comprenant la connexion auprès dudit équipement embarqué d'un module sécurisé comprenant lesdites données sensibles de sécurité nécessaires audit traitement sécurisé et l'authentification par le micrologiciel du module sécurisé de sorte à fournir audit micrologiciel lesdites données sensibles de sécurité pour la réalisation ultérieure dudit traitement sécurisé

Ainsi, les données sensibles, par exemple les paramètres PKI visés ci-dessus, ne sont pas directement intégrés au code binaire du logiciel résident dans l'équipement. En particulier, elles sont stockées sur un module sécurisé externe amovible au dit équipement.

Il résulte que le micrologiciel réalise un accès sécurisé à ces données sensibles pour mener l'opération de traitement sécurisé traditionnelle.

L'utilisation d'un module sécurisé pour le stockage de ces données sensibles ainsi que son authentification garantissent un degré de sécurité suffisant pour ne pas compromettre l'équipement. En particulier, cette authentification permet d'éviter qu'un tiers vienne charger un premier fichier de configuration corrompu qui permettrait le chargement "sécurisé" ultérieur de "*loads*" également corrompus.

Grâce à l'invention, la sécurité pour le chargement du premier fichier de configuration est maintenue tout en augmentant l'opérabilité du système embarqué, puisqu'une mise à jour des données sensibles, par exemple les paramètres PKI, peut être menée sur le module sécurisé sans intervenir, par une modification matérielle, sur l'équipement embarqué.

A titre d'exemple, l'invention s'applique au chargement de paramètres et codes binaires algorithmiques pour le chiffrement de moyens de communication, ces éléments étant généralement stockés "en dur" dans le micrologiciel de ces moyens de communication.

L'invention s'applique également à des dispositifs de filtrage réseau, par exemple entre les trois domaines "avionique", "maintenance" et "cabine" d'un aéronef. Dans ce cas, les paramètres et algorithmes de filtrage de ces dispositifs de filtrage, ou "passerelles", reliant les trois domaines d'équipements sont chargés de façon sécurisée dans le dispositif, tout en garantissant une grande souplesse de mise à jour.

Dans un mode de réalisation, ledit traitement sécurisé comprend le chargement sécurisé de données de fonctionnement depuis un serveur externe de chargement, et lesdites connexion et authentification sont réalisées préalablement au chargement des premières données de fonctionnement à charger. On entend ici par "données de fonctionnement de l'équipement embarqué" des données logicielles ou d'application qui, lorsqu'elles sont exécutées par l'équipement embarqué, lui confèrent une nouvelle fonctionnalité.

Cette configuration s'applique notamment à l'exemple de la **figure 1**, où les données sensibles - les paramètres PKI (clé et algorithmes) - nécessaires au chargement du premier fichier de configuration sont préalablement récupérées, après authentification, sur le module sécurisé.

Dans cet exemple, les données de fonctionnement, lorsqu'elles sont exécutées sur l'équipement embarqué, mettent en oeuvre la fonction de vérification pour le chargement des "*loads*" suivants.

Ces mêmes "*loads*" suivants peuvent aussi contenir d'autres données de fonctionnement, comme par exemple des applications dédiées au fonctionnement général du véhicule.

Dans un mode de réalisation, ladite authentification comprend des échanges de type "défi-réponse" entre le module sécurisé et l'équipement embarqué. Cette disposition assure une authentification efficace, notamment renforcée lorsque le module sécurisé et l'équipement embarqué partagent une première clé symétrique de cryptage utilisée lors des échanges de type "défi-réponse".

Dans cette dernière configuration, le micrologiciel intègre une clé symétrique et non plus une clé asymétrique PKI comme dans l'art antérieur. On réduit ainsi notablement les risques d'intervention nécessaire sur l'équipement embarqué pour modifier ces clés. En effet, les clés symétriques sont plus robustes et plus sûres que les clés asymétriques mises en oeuvre classiquement, par exemple dans l'infrastructure PKI.

En outre, le cycle de vie des clés symétriques est sensiblement similaire, voire supérieur, à celui d'un véhicule, par exemple un aéronef. Ainsi, on augmente la probabilité de ne pas intervenir du tout sur l'équipement embarqué pendant toute la durée de vie de l'aéronef.

Selon une caractéristique particulière de l'invention, l'équipement embarqué partagent une deuxième clé symétrique de cryptage avec un deuxième module sécurisé, et le procédé comprend un étape d'authentification du deuxième module sécurisé auprès de l'équipement embarqué à l'aide de ladite deuxième clé symétrique, par exemple par un mécanisme de "défi-réponse". Par la présence des deux clés symétriques permettant, chacune, une authentification forte des modules sécurisés, on fournit une gestion aisée des clés symétriques, car l'une peut servir de clé d'administration tandis que l'autre est utilisée comme clé d'usage.

Notamment, cette étape d'authentification à l'aide de la deuxième clé symétrique peut faire suite à l'échec d'une première étape d'authentification du deuxième module sécurisé à l'aide de la première clé symétrique (d'usage). Cela permet d'automatiser le processus d'authentification initié par le micrologiciel dans l'équipement embarqué: tout d'abord une authentification (d'usage) à l'aide de la première clé symétrique, puis en cas d'échec, une authentification à l'aide de la deuxième clé symétrique (d'administration).

Notamment, on prévoit que ladite première clé symétrique est stockée dans une zone mémoire réinscriptible de l'équipement embarqué, et le procédé comprend, en cas d'authentification positive du deuxième module, une mise à jour de ladite première clé symétrique par au moins une donnée contenue dans le deuxième module sécurisé. On aboutit à une gestion aisée des clés symétriques d'usage, sans intervention matérielle et nouveau cycle de certification. En effet, le remplacement d'une suite binaire correspondant à une valeur par une autre suite binaire n'est pas considérée comme une modification majeure du micrologiciel, et ne nécessite pas une re-certification. C'est principalement le code binaire représentatif d'un algorithme et susceptible d'être exécuté qui requiert une telle re-certification en cas de modification.

Dans un mode de réalisation particulier, les clés symétriques sont des clés dérivées d'une clé maître de cryptage. Ces clés dérivées sont également appelées "clés différenciées".

L'utilisation d'une clé maître dans un centre de génération de clés (qui doit être digne de confiance) et de clés dérivées au niveau des équipements embarqués offre de nombreux avantages, par exemple :
- le détenteur de la clé maître ne gère qu'une seule clé dont l'utilisation est très restreinte, donc avec peu de risques de compromission. De ce fait, on peut lui allouer une crypto-période identique à la durée de vie du véhicule (un aéronef, par exemple);
- il est aisé de re-générer une clé différenciée en cas de besoin;
- il est possible de ne révoquer que la clé d'un utilisateur (une compagnie aérienne exploitant un aéronef, par exemple) en cas de compromission d'une clé d'usage par perte d'un module sécurisé par exemple. On évite ainsi de révoquer toutes les clés du système;
- il est aisé de générer, sur le même schéma, des clés d'administration différenciées permettant de s'authentifier en tant qu'administrateur de l'équipement embarqué et de remplacer, de façon sûre, une clé d'usage révoquée dans un équipement embarqué.

Dans un mode de réalisation, le chargement sécurisé visé précédemment comprend la vérification, par signature numérique, de l'origine et de l'intégrité des données de fonctionnement à charger.

En particulier, on vérifie uniquement les premières données à charger à l'aide des données sensibles, ces premières données comprenant des données de configuration aptes à configurer ledit équipement embarqué pour le chargement sécurisé de données de fonctionnement suivantes. Par exemple, ces données de configuration comprennent des informations PKI utilisées au niveau logiciel pour sécuriser (par vérification de signature numérique) le chargement de données compilées de fonctionnement suivantes.

Cette configuration s'applique en particulier à l'exemple de la **figure 1** puisque les données de configuration du premier "*load*" permettent la mise en oeuvre du processus de chargement et de vérification des fichiers suivants à charger.

Dans un mode de réalisation, lesdites données sensibles comprennent des paramètres de cryptage d'une infrastructure à clés publiques. Grâce à cette disposition, on peut déployer à moindre frais une même infrastructure de sécurité sur une flotte importante de véhicules embarquant un équipement visé par ce mode de réalisation, et ce, malgré un grand nombre d'intervenants sur cette flotte. Dans le domaine aéronautique, il y a notamment un grand nombre de compagnies aériennes qui utilisent des aéronefs disposant d'un même type équipement selon l'invention. En particulier, lesdites informations comprennent au moins un certificat, un algorithme de hachage et un algorithme de signature.

Dans un mode de réalisation, ladite authentification est conduite automatiquement, par ledit micrologiciel, à la détection de la connexion avec le module sécurisé, et une authentification positive déclenche automatiquement le chargement sécurisé des données de fonctionnement. Dans cette configuration, le chargement des données (premier fichier de configuration) est rendu totalement automatique, c'est-à-dire sans pénalité par rapport aux mécanismes de l'art antérieur où toutes ces opérations sont directement intégrées dans le micrologiciel embarqué.

Selon une caractéristique particulière, en cas d'authentification positive, ledit équipement embarqué lit les données sensibles depuis ledit module sécurisé pour effectuer le chargement sécurisé.

En variante, le contrôle de sécurité du chargement des données est effectué par ledit module sécurisé. Dans cette configuration, on simplifie encore plus le micrologiciel puisque les outils de vérification de la signature sont stockés et exécutés dans le module sécurisé. L'équipement embarqué reprend la main une fois que le premier fichier de configuration a été chargé.

Dans un mode de réalisation, ledit module sécurisé est un jeton sécurisé, également appelé "*crypto-token*". En particulier, il peut s'agir d'une carte à puce sécurisée ou d'une clé USB sécurisée.

Corrélativement, l'invention vise également un équipement embarqué comme défini par la revendication 10, comportant notamment un micrologiciel apte à être exécuté lors de la mise en route de l'équipement embarqué pour réaliser un traitement sécurisé par l'utilisation de données sensibles de sécurité, le micrologiciel comprenant des moyens aptes à établir une connexion par authentification avec un module sécurisé externe comprenant lesdites données sensibles de sécurité nécessaires audit traitement de sorte à fournir audit micrologiciel lesdites données sensibles de sécurité pour la réalisation ultérieure dudit traitement sécurisé.

Notamment, les moyens d'authentification comprennent une première clé symétrique stockée dans une mémoire réinscriptible, type EEPROM (mémoire morte effaçable et programmable électriquement), et une deuxième clé symétrique intégré dans le code binaire dudit micrologiciel. Ainsi, on rend possible une gestion des (premières) clés d'usage à l'aide de (deuxièmes) clés d'administration.

De façon optionnelle, l'équipement peut comprendre des moyens se rapportant aux caractéristiques de procédé présentées ci-dessus.

L'invention vise également un système selon la revendication 11, comprenant notamment un équipement embarqué tel qu'exposé ci-dessus et un module sécurisé prévu pour être connecté audit équipement embarqué, le module sécurisé comprenant lesdites données sensibles de sécurité et des moyens d'authentification par clé symétrique. Les moyens d'authentification peuvent notamment comprendre des moyens logiciels de type "défi-réponse".

En particulier, dans le module sécurisé, les moyens d'authentification sont stockés dans un espace mémoire protégé en écriture et en lecture, et lesdites données sensibles de sécurité sont stockées dans un espace mémoire protégé uniquement en écriture.

Dans cette configuration, les éléments permettant l'authentification sûre du module sont confinés à l'abri alors que les données sensibles utiles pour le traitement sécurisé, par exemple le chargement du premier fichier de configuration, peuvent être laissées en accès lecture puisqu'elles sont sensibles uniquement en intégrité (d'où le protection en écriture) et non en confidentialité.

L'invention vise également un aéronef comprenant un équipement tel que présenté ci-dessus.

De façon optionnelle, l'aéronef et le système peuvent comprendre des moyens se rapportant aux caractéristiques d'équipement présentées ci-dessus.

D'autres particularités et avantages de l'invention apparaîtront encore dans la description ci-après, illustrée par les dessins ci-joints, dans lesquels :
- la **figure 1** représente un système de l'art antérieur;
- la **figure 2** représente un exemple de système selon l'invention;
- la **figure 3** illustre, sous forme de logigramme, le fonctionnement du système de la **figure 2** lors d'une phase d'initialisation;
- la **figure 4** illustre, sous forme de logigramme, le fonctionnement courant du système de la **figure 2** après initialisation;
- la **figure 5** illustre, sous forme de logigramme, l'installation d'un nouveau fichier de configuration dans le système de la **figure 2**;
- la **figure 6** illustre le mécanisme de génération des clés d'authentification dans des systèmes selon l'invention appliqués au domaine aéronautique; et
- la **figure 7** illustre, sous forme de logigramme, des étapes de gestion des clés d'authentification de la **figure 6** en cas de compromission.

Les modes de réalisation détaillés ci-après sont décrits en lien avec le chargement sécurisé des fichiers initiaux de configuration (*"premiers loads*") d'un équipement embarqué dans un aéronef, à l'aide de paramètres PKI permettant la vérification des signatures numériques de ces fichiers.

Néanmoins, outre l'injection de paramètres PKI dans l'équipement embarqué, l'invention peut être utilisée pour injecter tout autre type de données sensibles dans un équipement: des paramètres et algorithmes de filtrage, des mots de passe utilisateurs, des fichiers de configuration d'équipements de sécurité, etc.

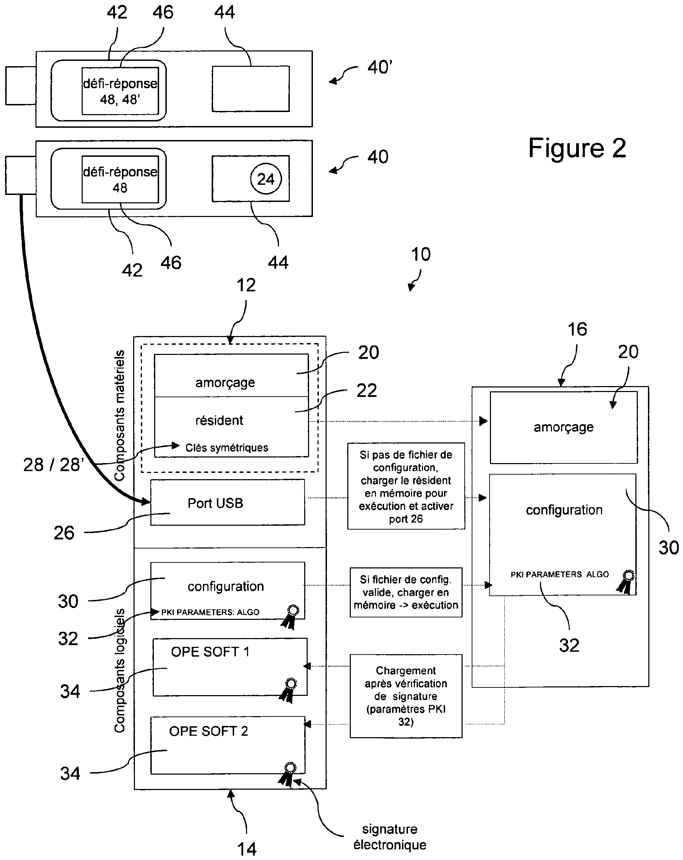

On a représenté, sur la **figure 2**, un mode de réalisation de l'invention reprenant, sous des références identiques, certains éléments de la **figure 1**.

L'équipement embarqué 10 présente ici un port de communication 26 spécifique permettant l'échange sécurisé de données avec un média externe sécurisé 40, de préférence de type amovible tel qu'un jeton sécurisé USB (ou crypto-token USB - bus série universel) ou une carte à puce. A titre d'exemple, un port de communication physique de type USB ou IEEE 1394 peut être utilisé. En alternative, une communication sans fil radiofréquence peut également permettre une communication sécurisée.

Dans l'équipement 10, le logiciel résident 22 comprend des moyens logiciels classiques de communication sur le port USB 26 comprenant notamment un clé symétrique d'usage 28 et une clé symétrique d'administration 28' intégrées directement dans le code binaire du logiciel résident 22. Toutefois, la clé symétrique d'usage 28 est stockée au format binaire sur une zone mémoire réinscriptible de type EEPROM.

Ces moyens de communication sont aptes à mettre en oeuvre un mécanisme d'authentification par défi-réponse sur le port 26 (ou *"challenge-response*" selon la terminologie anglo-saxonne) à l'aide d'une des clés symétriques 28, 28'.

En outre, le logiciel résident 22 comprend un code binaire de l'outil logiciel de vérification des signatures électroniques dans une infrastructure PKI (également appelé *"Digital Signature Checker*" ou DSC), qui permet de vérifier à l'aide de données sensibles logicielles de type paramètres PKI, de vérifier l'origine et l'intégrité d'un premier fichier de configuration 30.

Le jeton sécurisé USB 40 représenté dispose d'un module sécurisé interne 42, par exemple conforme aux Critères Communs ou à la norme FIPS 140-2, et d'une mémoire de stockage 44. Le module sécurisé 42 comprend également une mémoire sécurisée 46.

Dans ces deux mémoires, les données sont stockées sous forme chiffrée.

La mémoire de stockage 44 est protégée en écriture seulement. Son accès en écriture est alors possible au travers de la saisie d'un ou plusieurs codes personnels, également appelés codes PIN (numéro d'identification personnel). Les données sensibles logicielles, ici les paramètres PKI 24 utilisés par l'outil DSC du logiciel résident 22 pour vérifier la signature électronique du premier fichier de configuration 30, sont stockées dans cette mémoire de stockage 44, et comprennent un certificat racine, un algorithme de hachage et un algorithme de signature (tous trois pour effectuer les opérations de calcul et de vérification des signatures numériques).

Puisque les paramètres PKI 24 sont, pour l'application visée, sensibles uniquement en intégrité et non en confidentialité, il est intéressant de ne pas protéger cette zone mémoire 44 en lecture. En effet, puisque cette zone mémoire 44 est lue par le logiciel résident 22 pour récupérer les paramètres PKI, il y aurait lieu d'intégrer, en cas de protection en lecture de la mémoire 44, au code binaire du logiciel résident 22 les codes PIN d'accès à cette mémoire. On simplifie donc le logiciel résident 22 et la gestion des codes d'accès à cette mémoire 44.

Toutefois, on peut envisager de protéger la zone 44 en écriture, auquel cas il convient d'intégrer, comme indiqué ci-dessus, le code PIN d'accès au code binaire du logiciel résident 22.

La mémoire sécurisée 46 dans le module 42 est protégée en écriture et en lecture. Son accès dans l'un des deux modes est protégé par un ou plusieurs codes PIN éventuellement différents de ceux permettant l'accès à la zone mémoire 44.

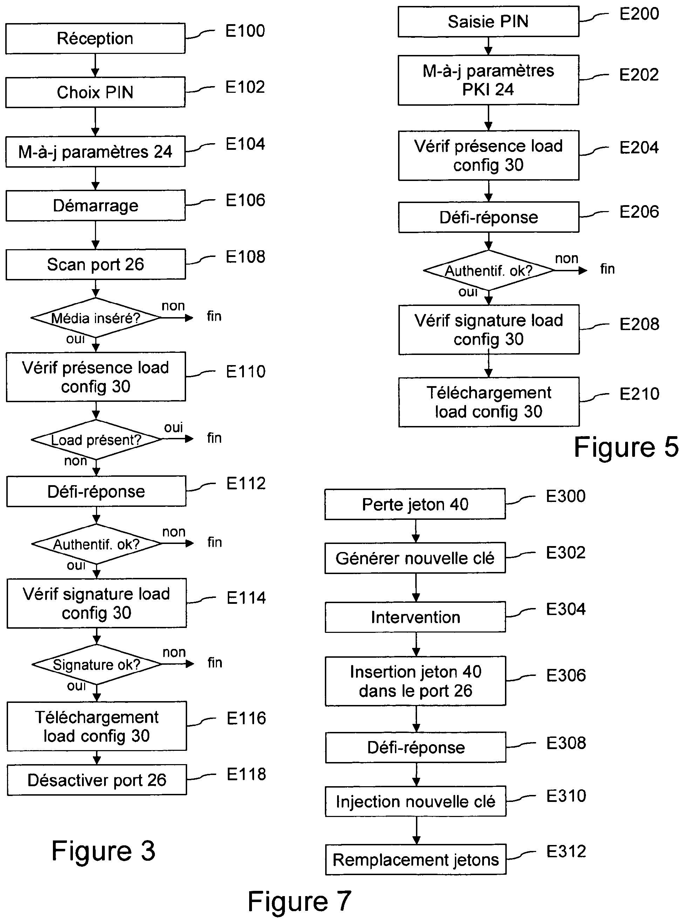

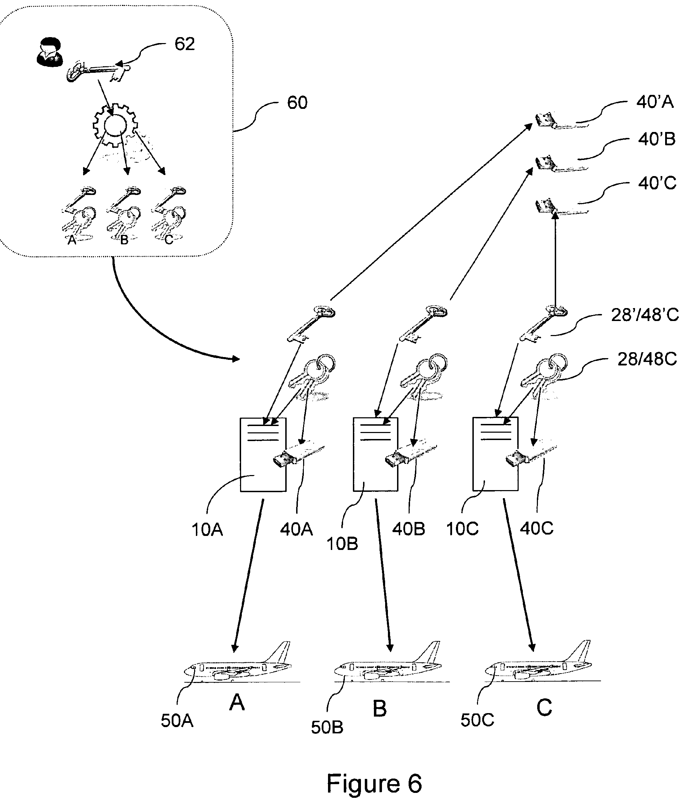

Dans cette zone mémoire 46, on stocke la clé symétrique d'usage 48 correspondant à la clé 28, ainsi que des moyens logiciels de communication pour une authentification par défi-réponse. De la sorte, on produit des jetons sécurisés d'usage 40 et des jetons sécurisés d'administration 40' dont on verra par la suite l'utilisation (**figures 6** et **7** notamment)

Grâce au mécanisme de défi-réponse et la clé symétrique 48, le jeton sécurisé 40 lorsqu'il est connecté au port 26 de l'équipement 10, établit une communication sécurisé avec le logiciel résident 22, comme on le verra par la suite.

Le code PIN d'accès à la zone sécurisée 46 est dit "code PIN administrateur". Il est détenu par le fournisseur de l'équipement embarqué 10 et/ou l'entité génératrice des clés symétriques 28/28'/48/48'.

Le code PIN d'accès à la zone de stockage 44 est dit "code PIN utilisateur". Il est configuré par l'utilisateur, et permet à ce dernier, depuis une station hôte accueillant le jeton USB 40, d'accéder à la zone mémoire 44 et d'écrire (par exemple pour une mise à jour) des paramètres "PKI" 24 nécessaires à la vérification des signatures électroniques du premier fichier de configuration 30.

Le partage d'au moins un élément secret 28/48 (ici les clés symétriques) entre un ou plusieurs médias amovibles 40 et l'équipement cible 10 permet l'identification forte de ces médias amovibles 40 et donc permet de détecter d'éventuels médias non autorisés.

On note que, par le mécanisme de défi-réponse, les clés symétriques ne sont pas divulguées, mais uniquement utilisées. Seule une réponse au "défi-réponse" est transmise à l'autre entité participant à l'authentification.

Un second type de jeton sécurisé est utilisé pour l'invention comme développé plus loin. Ce jeton sécurisé 40' est dit d'administration et est utilisé pour mettre à jour la clé symétrique d'usage 28 au sein de l'équipement 10.

Ce jeton 40' est similaire au jeton sécurisé 40 à l'exception qu'il ne stocke pas des paramètres PKI 24 (parce que sa finalité est celle de la mise à jour de la clé 28 et non de fournir les données sensibles 24), et qu'il stocke dans son module sécurisé 42, la clé symétrique d'administration 48' avec laquelle il peut s'identifier auprès de l'équipement embarqué 10.

Pour sa fonction de mise à jour, ce jeton 40' stocke également, dans la mémoire sécurisée 46, la nouvelle clé d'usage 28 qu'il convient d'injecter dans l'équipement 10.

De par sa fonction, ce jeton d'administration 40' ne stocke pas nécessairement les paramètres PKI 24.

L'utilisation d'une clé symétrique pour le processus d'authentification des médias 40/40' auprès des équipements cibles 10 présentent différents avantages :
- des qualités cryptographiques intrinsèques permettant, à longueur de clé identique, une durée de vie de la clé (ou crypto-période) supérieure à celle qu'autorisent les modèles asymétriques des solutions connues. Ainsi, le logiciel résident 22 intégrant, directement dans son code binaire, la clé symétrique, doit être renouvelé ou modifié moins souvent ;
- des performances supérieures comparé aux solutions asymétriques. Les algorithmes symétriques sont notamment beaucoup plus rapides que ceux utilisés en cryptographie asymétrique ;
- la possibilité d'utiliser des "Clés maîtres" pour générer des "Clés dérivées" ou "Clés différenciées. Ces dernières sont générées localement à partir d'une même clé maître pour être utilisées par des mécanismes ou environnements distincts. Dans le présent exemple aéronautique, les clés seront différenciées par compagnie aérienne, par exemple. On note que seules les clés symétriques dérivées ou différenciées 28/48 sont stockées dans les équipements embarqués 10 et/ou les médias 40/40' ;
- la possibilité d'une authentification forte :
   o des données 34 injectées par « code d'authentification de message » ;
   o des médias 40 par « défi-réponse ».

On décrit maintenant, en référence à la **figure 3**, le fonctionnement de l'équipement embarqué 10 lors de son initialisation.

A l'étape E100, l'utilisateur, ici une compagnie aérienne réceptionnant un avion, reçoit l'équipement embarqué 10 et un jeton sécurisé 40 d'usage.

A l'étape E102, l'utilisateur choisit un code PIN permettant l'écriture des paramètres PKI 24 dans la zone mémoire de stockage 44.

A l'étape E104, l'utilisateur connecte le jeton 40 à une station de travail, puis met à jour les paramètres PKI 24 en mémoire 44 si nécessaire, en accédant à cette mémoire par saisie du code PIN choisi juste avant. Lors de la première utilisation du jeton 40, la compagnie aérienne écrit notamment les paramètres PKI 24.

A l'étape E106, on connecte le jeton sécurisé 40 au port USB 26 de l'équipement embarqué 10, puis on met ce dernier sous tension.

A l'étape E108, le logiciel d'amorçage 20 est exécuté et scanne le port externe USB 26 afin de déterminer la présence d'un média connecté.

A ce stade, si aucun jeton sécurisé 40 n'était détecté, l'équipement embarqué 10 indiquerait qu'il ne peut continuer le processus.

En l'espèce, l'équipement 10 détecte la présence du jeton sécurisé 40.

A l'étape E110, le logiciel d'amorçage 20 vérifie la présence du premier fichier de configuration 30 en mémoire 14 de l'équipement 10. Puisqu'il s'agit de l'initialisation du système, ce fichier 30 n'est pas présent. Si lors de la fabrication du système, un fichier 30 était écrit en mémoire 14, le processus d'initialisation prendrait fin à ce stade.

A l'étape E112, le logiciel résident 22 est alors exécuté et active le port de communication 26 pour lancer un challenge défi-réponse basé sur la clé symétrique d'usage 28. Le jeton sécurisé 40 présent sur le port USB 26 renvoie alors une réponse sur la base de la clé symétrique d'usage 48, laquelle réponse est vérifiée par le logiciel résident, selon les mécanismes classiques de défi-réponse.

Par ce mécanisme, seuls les médias amovibles 40 de confiance sont amenés à communiquer avec l'équipement 10 et le logiciel résident 22.

Si la réponse au défi est erronée, on peut mettre fin au traitement ou entamer une deuxième procédure d'authentification sur la base, cette fois-ci, des clés symétriques d'administration 28'/48', comme on le verra par la suite, notamment pour mettre à jour la clé symétrique d'usage 28 dans l'équipement 10.

En cas de défi-réponse validé, on poursuit à l'étape E114 où le logiciel résident 22 récupère les paramètres PKI 24 stockés en mémoire 44 et conduit une vérification de l'origine et de l'intégrité d'un premier fichier de configuration 30 au niveau du chargeur de données. Cette vérification repose sur une vérification de la signature numérique du fichier 30 à l'aide des paramètres PKI 24.

En cas d'origine et d'intégrité valables, le premier fichier de configuration 30 est, à l'étape E116, téléchargé sur l'équipement embarqué 10 et installé, de façon similaire à l'état de l'art. L'équipement embarqué 10 dispose ainsi des moyens 32 d'infrastructure PKI nécessaires au téléchargement des fichiers compilés de fonctionnement suivants 34.

On termine, à l'étape E118, en désactivant le port de communication 26.

Ainsi, l'équipement embarqué 10 poursuit alors son exécution par le téléchargement classique des autres "*loads*" 34 de fonctionnement du système (avec vérification de ces "*loads*" à l'aide des paramètres PKI 32 contenus dans le premier fichier de configuration 30): par exemple des données utilisateurs, d'autres applications apportant des fonctionnalités à l'équipement en vue du fonctionnement de l'avion, etc.

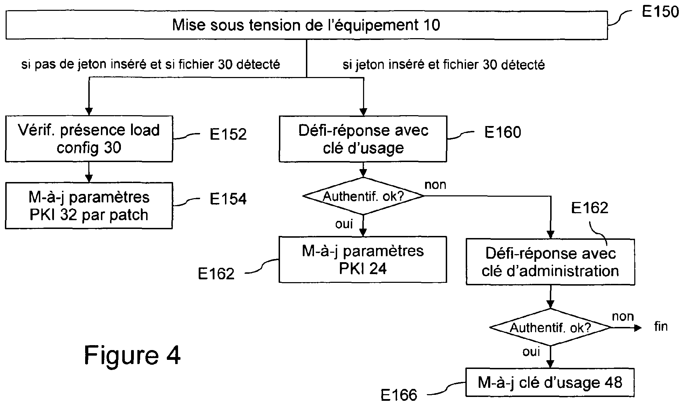

On décrit maintenant, en référence à la **figure 4**, le fonctionnement de l'équipement embarqué 10, lors des utilisations ultérieures à l'initialisation de celui-ci. Cela correspond à l'utilisation classique de l'équipement 10.

A l'étape E150, on met sous tension l'équipement embarqué 10, déclenchant l'exécution du logiciel d'amorçage 20.

Ce dernier effectue un balayage ("*scan*") du port externe 26 et une détection de la présence du premier fichier de configuration 30 en mémoire 14.

La situation classique est celle où le fichier de configuration 30 contenant les paramètres PKI 32 est présent en mémoire et où aucun jeton sécurisé 26 n'est détecté sur le port USB 26.

Dans ce cas, à l'étape E152, l'équipement 10 désactive le port USB 26 et procède de façon classique au téléchargement des fichiers de traitement 34 après vérification de ceux-ci au moyen des paramètres PKI 32. Cette étape comprend notamment le chargement en mémoire vive 16 du fichier 30 pour exécution.

Pendant l'utilisation de l'équipement 10, si les signatures numériques de nouveaux fichiers de fonctionnement 34 évoluent d'une version N à une version N+1, les paramètres PKI 32 nécessaires à la vérification de ces signatures sont mis à jour, lors de l'étape E154, par patch du premier fichier de configuration 30 en mémoire 14. Cette mise à jour est conforme à ce qui est proposé ci-dessus en lien avec la **figure 1**, notamment on utilise un fichier correctif signé en version N et comprenant les nouveaux paramètres PKI de version N+1.

Dans un deuxième cas à l'issue de l'étape E150, un jeton 40 est détecté et un premier fichier de configuration 30 est détecté en mémoire 14. Ce deuxième cas correspond généralement à un besoin de mettre à jour les paramètres PKI 24 nécessaires à la vérification du premier fichier de configuration 30. Ainsi, le jeton 40 détecté intègre de nouveaux paramètres PKI 24 en version N+1.

Dans ce cas, à l'étape E160, le logiciel résident 22 lance un défi-réponse basé sur la clé symétrique d'usage 28 au jeton sécurisé 40.

Si la réponse au challenge est correcte, l'équipement 10 accède, à l'étape E162, aux nouveaux paramètres PKI 24 en version N+1 et procède à une mise à jour des paramètres PKI dans l'équipement 10.

Ce dernier est alors apte à vérifier et télécharger un nouveau premier fichier de configuration 30 signé en version N+1 qui aura été mise, entre temps, à disposition par le chargeur de données.

On voit ici que les paramètres PKI 24 pour télécharger le premier fichier 30 sont mis à jour sans modification matérielle de l'équipement 10.

Si la réponse au challenge n'est pas correcte à l'étape E160, le logiciel résident 22 lance, à l'étape E164, un nouveau challenge défi-réponse au jeton 40, cette fois sur la base de la clé symétrique d'administration 28'. Si la réponse à ce deuxième challenge est correcte (dans ce cas, le jeton connecté est un jeton sécurisé d'administration 40'), le logiciel résident 22 procède, à l'étape E166, à une mise à jour de la clé d'usage 28 stockée dans l'équipement 10.

Cette situation est rencontrée lors d'une séquence de remplacement de la clé symétrique d'usage (propre à une compagnie aérienne), par exemple suite à une compromission de celle-ci ou la perte d'un jeton d'usage 40.

Après remplacement de la clé d'usage 48, on redémarre l'équipement 10 à l'étape E150.

On s'intéresse à l'évolution de la signature électronique du premier fichier de configuration 30 d'une version N à une version N+1, en référence maintenant à la **figure 5**, lorsque l'équipement a été remis à zéro après évolution de la signature numérique.

A l'étape E200, l'utilisateur connecte son jeton sécurisé 40 à une station hôte et obtient les droits en écriture de la zone mémoire 44 en saisissant un code PIN approprié.

A l'étape E202, l'utilisateur met à jour les paramètres PKI 24 à l'intérieur de la zone mémoire 44 du jeton 40, et les fait passer en version N+1.

A l'étape E204, l'utilisateur connecte le jeton 40 mis à jour sur le port 26 de l'équipement embarqué 10 et met sous tension ce dernier. Le logiciel d'amorçage 20 vérifie alors la présence du jeton 40 sur le port 26 et celle du premier fichier de configuration 30 en mémoire 14. Cette étape E204 correspond à l'étape E150 de la **figure 4**.

Dans le cas présent, du fait de la remise à zéro de l'équipement 10 provoquant un effacement de la mémoire 14, aucun fichier de configuration 30 n'est détecté.

A l'étape E206, le logiciel résident 22 lance un challenge défi-réponse au jeton 40 sur la base de la clé d'usage 28 de façon similaire à ce qui a été décrit précédemment.

Si la réponse au challenge est correcte, à l'étape E208, le logiciel résident 22 récupère les paramètres PKI 24 de la version N+1 contenus dans le jeton sécurisé 40 connecté, et vérifie l'origine et l'intégrité du premier fichier de configuration 30 disponible auprès du chargeur de données. Cette vérification de signature électronique est bien entendue effectuée, à ce stade, à l'aide des nouveaux paramètres PKI en version N+1.

Le chargement du fichier de configuration 30 est alors réalisé à l'étape E210. Puis l'exécution se poursuit par la vérification et le téléchargement des autres fichiers de fonctionnement 34, sur la base des paramètres PKI contenus dans le fichier de configuration 30 nouvellement chargé.

On voit ainsi que l'on a mis à jour les paramètres PKI nécessaires au chargement du premier fichier de configuration 30 sans toucher au micrologiciel 12. On évite ainsi la dépose de l'équipement et la modification du code binaire du logiciel résident 22.

On illustre maintenant, en référence aux **figures 6** et **7**, un exemple de gestion des clés symétriques permettant l'authentification forte entre un jeton sécurisé 40 d'utilisateur et un équipement embarqué 10.

Sur la **figure 6**, on a représenté des avions 50A, 50B et 50C appartenant à des flottes respectivement de compagnies aériennes A, B et C.

Chaque avion 50 embarque un équipement (identifié ici 10A, 10B, 10C selon la compagnie) et un jeton sécurisé utilisateur 40A, 40B, 40C, de type "cryptographic-token USB", est mis à la disposition par exemple des pilotes de l'avion 50. Le port 26 prévu sur les équipements 10 est conforme à la norme USB.

Comme on l'a vu précédemment, l'équipement 10 et le jeton sécurisé 40 intègrent tous eux une même clé symétrique d'usage 28/48 (avec l'indice A, B et C selon la compagnie) utilisée pour l'authentification E160 notamment.

Pour chaque compagnie aérienne, est prévue un jeton sécurisé 40'A, 40'B, 40'C stockant la clé symétrique d'administration 48' (elle-même stockée par les équipements 10 sous la référence 28'). Ce jeton d'administration 40' permet notamment de mettre à jour la clé symétrique d'usage 48 à l'intérieur de l'équipement 10 (étape E168).

On a également représenté, sur la **figure 6**, un centre 60 de génération des clés symétriques 28/48 et 28'/48' par dérivation à partir d'une clé maître 62.

La clé maître 62 est une clé "symétrique" sur 256 bits et permet, par des mécanismes classiques, de générer les clés d'usage 28/48A,B,C et d'administration 28'/48'A,B,C différenciées pour chacune des compagnies aériennes A, B et C. La longueur de ces clés différenciées peut être adaptée à la législation locale en vigueur, par exemple des clés de 128 bits.

Ces clés 28/48/28'/48' sont protégées durant leur transfert entre le centre de génération 60 et le fournisseur par des moyens cryptographiques classiques (Tunnel VPN, PKI,...). Des mesures de confinement particulières sont mises en place pour assurer la non-compromission de ces clés durant leur manipulation au niveau du fournisseur: par exemple on met en place une procédure d'habilitation du personnel, on utilise des infrastructures appropriées, on dédie du matériel informatique à cette tâche, etc.

L'authentification entre l'équipement 10 et les jetons 40, 40' s'appuie sur des challenges "défi-réponse" utilisant un chiffrement par blocs (AES - standard de chiffrement avancé).

On illustre maintenant, en référence à la **figure 7**, la gestion de la compromission des clés suite à la perte d'un jeton sécurisé 40 contenant la clé différenciée d'usage 48 d'une compagnie.

On note que la **figure 7** ne traite pas de la compromission de la clé maître 62 qui est en pratiquement hautement improbable. On précise néanmoins que, dans ce cas, l'ensemble du système est compromis, et l'édition de nouvelle clé maître 62 et de nouvelles clés dérivées 28/48/28'/48' doit être réalisée par le centre de génération 60. En particulier, la mise en place des nouvelles clés dérivées se fait directement dans tous les jetons sécurisés 40, 40' des compagnies et, par rattrapage ("*retrofit*" selon la terminologie anglo-saxonne), pour les équipements embarqués 10 sur les avions 50.

Concernant la perte d'un jeton sécurisé 40 d'une compagnie, l'utilisateur déclare la perte de ce jeton 40 à l'étape E300.

A l'étape E302, la centre de génération 60 génère une nouvelle clé différenciée d'usage 48 pour la compagnie.

A l'étape E304, on déclenche une intervention d'un administrateur sur les avions 50 impactés par cette perte du jeton 40.

A l'étape E306, l'administrateur insère son jeton sécurisé d'administration 40' stockant notamment la nouvelle clé d'usage 48 générée, dans le port USB 26 de l'équipement embarqué 10.

A l'étape E308, une authentification par défi-réponse est déclenchée par le jeton d'administration 40' à l'équipement 10, sur la base de la clé symétrique d'administration 28'/48'.

Une fois l'authentification effectuée, à l'étape E310, l'administrateur injecte la nouvelle clé différenciée d'usage 28 de la compagnie dans l'équipement 10. Cette injection consiste en l'écriture par écrasement de la nouvelle clé 28 dans la zone mémoire EEPROM de l'équipement 10 dédiée au stockage de la clé d'usage. Ces opérations sont notamment pilotées par le logiciel résident 22.

Enfin, à l'étape E312, on remplace les jetons sécurisés utilisateurs 40 de la compagnie touchée par des jetons comprenant la nouvelle clé différenciée d'usage 28.

Par ailleurs, en cas de compromission de clé différenciée d'administration 28' ou 48' d'une compagnie, seuls les équipements 10 de cette compagnie sont impactés. Une nouvelle clé d'administration au profit de la compagnie est alors générée à partir de la même clé maître 62. La mise en place de la nouvelle clé 28'/48' se fait alors par changement des jetons sécurisés d'administration 40' et par rattrapage (retrofit) pour les équipements embarqués 10 sur les avions 50.

Les exemples qui précèdent ne sont que des modes de réalisation de l'invention qui ne s'y limite pas.

L'invention s'applique également lorsque l'équipement embarqué 10 ne dispose pas de mémoire morte 14 de stockage. Dans ce cas, à chaque redémarrage, l'équipement 10 charge le premier fichier de configuration 30 puis les autres fichiers de fonctionnement 34.

Par ailleurs, on a envisagé ci-dessus le cas où la vérification du premier fichier de configuration 30 était réalisée par le logiciel résident 22 à l'aide des paramètres PKI 24 récupérés depuis le jeton sécurisé 40. Cependant, on peut envisager que les outils logiciels DSC de vérification de signature sont sur le jeton sécurisé 40. Ces outils sont alors exécutés par le module sécurisé 42. Cette fonctionnalité évite une modification matérielle de l'équipement embarqué 10 en cas d'évolution de l'outil logiciel de vérification.

Egalement, les modes de réalisation ci-dessus décrivent le téléchargement à bord de fichiers de fonctionnement. Toutefois, on peut envisager d'utiliser l'invention pour charger, depuis le bord du véhicule vers une station au sol, des données sensibles telles que des fichiers de journalisation (ou "*logs*" selon la terminologie anglo-saxonne).

## Revendications

1. Procédé de fonctionnement d'un équipement embarqué (10) dans un aéronef, l'équipement embarqué comportant un micrologiciel (22) intégré dans un composant matériel certifié de l'équipement embarqué de sorte qu'une modification dudit micrologiciel nécessite une nouvelle certification du composant matériel l'intégrant, le micrologiciel comprenant des instructions binaires pour la mise en oeuvre d'un traitement sécurisé et est apte à être exécuté lors de la mise en route de l'équipement embarqué pour réaliser le traitement sécurisé (E114, E208) par l'utilisation de données sensibles de sécurité (24) de cryptage d'une infrastructure à clés publiques, **caractérisé en ce qu'**il comprend :
- la connexion auprès dudit équipement embarqué (10) d'un module sécurisé externe (40) comprenant lesdites données sensibles de sécurité (24) de cryptage d'une infrastructure à clés publiques nécessaires audit traitement sécurisé sur l'équipement embarqué ;
- l'authentification (E112, E206), par le micrologiciel (22), du module sécurisé externe (40) de sorte à fournir audit micrologiciel (22) lesdites données sensibles de sécurité (24) de cryptage d'une infrastructure à clés publiques ; et
- ultérieurement à l'authentification, l'exécution dudit traitement sécurisé à l'aide des données sensibles de sécurité de cryptage d'une infrastructure à clés publiques obtenues du module sécurisé authentifié, incluant une vérification, à l'aide des données sensibles de sécurité de cryptage d'une infrastructure à clés publiques, d'une signature numérique certifiant l'origine et l'intégrité de données de configuration à charger depuis un serveur chargeur externe et un chargement sécurisé des données de configuration (30) depuis le serveur externe de chargement à travers un réseau de communication en cas de vérification positive de la signature numérique, lesdites données de configuration chargées comportant des paramètres de cryptage d'une infrastructure à clés publiques.

2. Procédé selon la revendication 1, dans lequel ledit équipement embarqué met en oeuvre des fonctionnalités, et ledit traitement sécurisé (E114, E208) comprend en outre le chargement sécurisé, depuis le serveur externe de chargement et à l'aide des paramètres de cryptage contenus dans les données de configuration chargées, de données de fonctionnement (30) qui procurent à l'équipement embarqué, lorsqu'elles sont chargées, lesdites fonctionnalités.

3. Procédé selon la revendication 1, dans lequel ladite authentification comprend des échanges de type "défi-réponse" entre le module sécurisé et l'équipement embarqué, et le module sécurisé (40) et l'équipement embarqué (10) partagent une première clé symétrique de cryptage (28, 48) utilisée lors des échanges de type "défi-réponse".

4. Procédé selon la revendication précédente, dans lequel l'équipement embarqué (10) partage une deuxième clé symétrique de cryptage (28', 48') avec un deuxième module sécurisé (40'), et le procédé comprend un étape d'authentification (E162, E308) du deuxième module sécurisé (40') auprès de l'équipement embarqué (10) à l'aide de ladite deuxième clé symétrique (28', 48').

5. Procédé selon la revendication précédente, dans lequel ladite première clé symétrique (28, 48) est stockée dans une zone mémoire réinscriptible de l'équipement embarqué (10), et le procédé comprend, en cas d'authentification positive du deuxième module (40'), une mise à jour de ladite première clé symétrique (28, 48) par au moins une donnée (48') contenue dans le deuxième module sécurisé.

6. Procédé selon la revendication 1, dans lequel ladite authentification est conduite automatiquement, par ledit micrologiciel, à la détection de la connexion avec le module sécurisé, et une authentification positive déclenche automatiquement le chargement sécurisé des données de configuration.

7. Procédé selon la revendication 6, dans lequel, en cas d'authentification positive, ledit équipement embarqué lit les données sensibles depuis ledit module sécurisé pour effectuer le chargement sécurisé.

8. Procédé selon la revendication 6, dans lequel, le contrôle de sécurité du chargement des données est effectué par ledit module sécurisé.

9. Procédé selon l'une quelconque des revendications précédentes, dans lequel lesdites données sensibles de sécurité de cryptage d'une infrastructure à clés publiques comprennent au moins un certificat, un algorithme de hachage et un algorithme de signature.

10. Equipement embarqué (10) dans un aéronef, l'équipement embarqué comportant un composant matériel certifié et un micrologiciel (22) intégré dans le composant matériel certifié de sorte qu'une modification dudit micrologiciel nécessite une nouvelle certification du composant matériel l'intégrant, le micrologiciel comprenant des instructions binaires pour la mise en oeuvre d'un traitement sécurisé et est apte à être exécuté lors de la mise en route de l'équipement embarqué pour réaliser le traitement sécurisé (E114, E208) par l'utilisation de données sensibles de sécurité (24) de cryptage d'une infrastructure à clés publiques, **caractérisé en ce que** le micrologiciel (22) comprend des moyens (28) aptes à établir une connexion par authentification avec un module sécurisé externe (40) comprenant lesdites données sensibles de sécurité (24) de cryptage d'une infrastructure à clés publiques nécessaires audit traitement sécurisé sur l'équipement embarqué de sorte à fournir audit micrologiciel (22) lesdites données sensibles de sécurité (24) de cryptage d'une infrastructure à clés publiques, et comprend des moyens d'exécution pour exécuter, ultérieurement à l'authentification, ledit traitement sécurisé à l'aide des données sensibles de sécurité de cryptage d'une infrastructure à clés publiques obtenues du module sécurisé authentifié incluant une vérification, à l'aide des données sensibles de sécurité de cryptage d'une infrastructure à clés publiques, d'une signature numérique certifiant l'origine et l'intégrité de données de configuration à charger depuis un serveur chargeur externe et un chargement sécurisé des données de configuration (30) depuis le serveur externe de chargement à travers un réseau de communication en cas de vérification positive de la signature numérique, lesdites données de configuration chargées comportant des paramètres de cryptage d'une infrastructure à clés publiques.

11. Système comprenant un équipement embarqué (10) selon la revendication précédente et un module sécurisé externe (40) prévu pour être connecté audit équipement embarqué (10), le module sécurisé (40) comprenant lesdites données sensibles de sécurité (24) de cryptage d'une infrastructure à clés publiques, stockées dans un espace mémoire (44) protégé uniquement en écriture, et des moyens d'authentification par clé symétrique (48), stockés dans un espace mémoire (46) protégé en écriture et en lecture.

12. Aéronef (50) comprenant un équipement selon la revendication 10.

## Patentansprüche

1. Betriebsverfahren eines Bordgeräts (10) in einem Luftfahrzeug, das Bordgerät umfassend eine Firmware (22), die in eine zertifizierte materielle Komponente des Bordgeräts integriert ist, so dass eine Änderung der Firmware eine neue Zertifizierung der materiellen Komponente erfordert, in die die Firmware integriert ist, die Firmware umfassend binäre Anweisungen zur Umsetzung einer gesicherten Verarbeitung und ist in der Lage, beim Einschalten des Bordgeräts ausgeführt zu werden, um die gesicherte Verarbeitung (E114, E208) mithilfe sensibler Sicherheitsdaten (24) zur Verschlüsselung einer Public-Key-Infrastruktur umzusetzen, **dadurch gekennzeichnet, dass** es Folgendes umfasst:
- das Verbinden eines externen gesicherten Moduls (40), das die sensiblen Sicherheitsdaten (24) zur Verschlüsselung einer Public-Key-Infrastruktur umfasst, die zur gesicherten Verarbeitung in dem Bordgerät erforderlich sind, mit dem Bordgerät (10);
- die Authentifizierung (E112, E206), durch die Firmware (22), des externen gesicherten Moduls (40), um der Firmware (22) die sensiblen Sicherheitsdaten (24) zur Verschlüsselung einer Public-Key-Infrastruktur zu liefern; und
- nach der Authentifizierung, die Ausführung der gesicherten Verarbeitung mithilfe der sensiblen Sicherheitsdaten zur Verschlüsselung einer Public-Key-Infrastruktur, die von dem authentifizierten gesicherten Modul erhalten wurden, einschließlich einer Überprüfung, mithilfe der sensiblen Sicherheitsdaten zur Verschlüsselung einer Public-Key-Infrastruktur, einer digitalen Signatur, die die Herkunft und die Integrität von Konfigurationsdaten zertifiziert, die von einem externen Ladeserver zu laden sind, und eines gesicherten Ladens der Konfigurationsdaten (30) von dem externen Ladeserver über ein Kommunikationsnetzwerk, falls die Überprüfung der digitalen Signatur positiv ausfällt, wobei die geladenen Konfigurationsdaten Parameter zur Verschlüsselung einer Public-Key-Infrastruktur umfassen.

2. Verfahren nach Anspruch 1, wobei das Bordgerät Funktionalitäten umsetzt und die gesicherte Verarbeitung (E114, E208) ferner das gesicherte Laden, von dem externen Ladeserver und mithilfe der Verschlüsselungsparameter, die in den geladenen Konfigurationsdaten enthalten sind, von Betriebsdaten (30) umfasst, die das Bordgerät mit den Funktionalitäten versehen, wenn sie geladen sind.

3. Verfahren nach Anspruch 1, wobei die Authentifizierung Austausche des "Challenge-Response"-Typs zwischen dem gesicherten Modul und dem Bordgerät umfasst und das gesicherte Modul (40) und das Bordgerät (10) einen ersten symmetrischen Verschlüsselungsschlüssel (28, 48) teilen, der bei den Austauschen des "Challenge-Response"-Typs genutzt wird.

4. Verfahren nach dem vorhergehenden Anspruch, wobei das Bordgerät (10) einen zweiten symmetrischen Verschlüsselungsschlüssel (28', 48') mit einem zweiten gesicherten Modul (40') teilt und das Verfahren einen Schritt der Authentifizierung (E162, E308) des zweiten gesicherten Moduls (40') gegenüber dem Bordgerät (10) mithilfe des zweiten symmetrischen Schlüssels (28', 48') umfasst.

5. Verfahren nach dem vorhergehenden Anspruch, wobei der erste symmetrische Schlüssel (28, 48) in einem wiederbeschreibbaren Speicherbereich des Bordgeräts (10) gespeichert wird und das Verfahren, wenn die Authentifizierung des zweiten Moduls (40') positiv ausfällt, eine Aktualisierung des ersten symmetrischen Schlüssels (28, 48) durch mindestens ein Datenelement (48') umfasst, das in dem zweiten gesicherten Modul enthalten ist.

6. Verfahren nach Anspruch 1, wobei die Authentifizierung durch die Firmware bei der Erkennung der Verbindung mit dem gesicherten Modul automatisch vorgenommen wird und eine positive Authentifizierung automatisch das gesicherte Laden der Konfigurationsdaten auslöst.

7. Verfahren nach Anspruch 6, wobei im Falle einer positiven Authentifizierung das Bordgerät die sensiblen Daten von dem gesicherten Modul liest, um das gesicherte Laden durchzuführen.

8. Verfahren nach Anspruch 6, wobei die Sicherheitsprüfung des Ladens der Daten von dem gesicherten Modul durchgeführt wird.

9. Verfahren nach einem der vorhergehenden Ansprüche, wobei die sensiblen Sicherheitsdaten zur Verschlüsselung einer Public-Key-Infrastruktur mindestens ein Zertifikat, einen Hash-Algorithmus und einen Signatur-Algorithmus umfassen.

10. Bordgerät (10) in einem Luftfahrzeug, das Bordgerät umfassend eine zertifizierte materielle Komponente und eine Firmware (22), die in das zertifizierte Bordgerät integriert ist, so dass eine Änderung der Firmware eine neue Zertifizierung der materiellen Komponente erfordert, in die die Firmware integriert ist, die Firmware umfassend binäre Anweisungen zur Umsetzung einer gesicherten Verarbeitung und ist in der Lage, beim Einschalten des Bordgeräts ausgeführt zu werden, um die gesicherte Verarbeitung (E114, E208) mithilfe sensibler Sicherheitsdaten (24) zur Verschlüsselung einer Public-Key-Infrastruktur umzusetzen, **dadurch gekennzeichnet, dass** die Firmware (22) Mittel (28) umfasst, die in der Lage sind, eine Verbindung durch Authentifizierung mit einem externen gesicherten Modul (40) herzustellen, das die sensiblen Sicherheitsdaten (24) zur Verschlüsselung einer Public-Key-Infrastruktur umfasst, die zur gesicherten Verarbeitung in dem Bordgerät erforderlich sind, um die sensiblen Sicherheitsdaten (24) zur Verschlüsselung einer Public-Key-Infrastruktur an die Firmware (22) zu liefern, und Ausführungsmittel umfasst, um nach der Authentifizierung die gesicherte Verarbeitung mithilfe der sensiblen Sicherheitsdaten zur Verschlüsselung einer Public-Key-Infrastruktur, die von dem authentifizierten gesicherten Modul erhalten wurden, einschließlich einer Überprüfung, mithilfe der sensiblen Sicherheitsdaten zur Verschlüsselung einer Public-Key-Infrastruktur, einer digitalen Signatur, die die Herkunft und die Integrität von Konfigurationsdaten zertifiziert, die von einem externen Ladeserver zu laden sind, und eines gesicherten Ladens der Konfigurationsdaten (30) von dem externen Ladeserver über ein Kommunikationsnetzwerk, falls die Überprüfung der digitalen Signatur positiv ausfällt, auszuführen, wobei die geladenen Konfigurationsdaten Parameter zur Verschlüsselung einer Public-Key-Infrastruktur umfassen.

11. System umfassend ein Bordgerät (10) nach dem vorhergehenden Anspruch und ein externes gesichertes Modul (40), das vorgesehen ist, mit dem Bordgerät (10) verbunden zu sein, das gesicherte Modul (40) umfassend die sensiblen Sicherheitsdaten (24) zur Verschlüsselung einer Public-Key-Infrastruktur, die in einem Speicherbereich (44) gespeichert sind, der nur schreibgeschützt ist, und Mittel zur Authentifizierung durch einen symmetrischen Schlüssel (48), die in einem Speicherbereich (46) gespeichert sind, der schreib- und lesegeschützt ist.

12. Luftfahrzeug (50), das ein Gerät nach Anspruch 10 umfasst.

## Claims

1. Method for operating an embedded equipment item (10) in an aircraft, the embedded equipment item comprising firmware (22) incorporated in a certified hardware component of the embedded equipment item such that a modification of said firmware requires a new certification of the hardware component incorporating same, the firmware comprising binary instructions for implementing a secure processing operation and is capable of being executed when the embedded equipment item is started up to perform the secure processing operation (E114, E208) by the use of sensitive encryption security data (24) of a public key infrastructure, **characterized in that** it comprises:
- the connection to said embedded equipment item (10) of an external secure module (40) comprising said sensitive encryption security data (24) of a public key infrastructure necessary for said secure processing operation on the embedded equipment item;
- the authentication (E112, E206), by the firmware (22), of the external secure module (40) so as to provide said firmware (22) with said sensitive encryption security data (24) of a public key infrastructure; and
- following the authentication, the execution of said secure processing operation using the sensitive encryption security data of a public key infrastructure obtained from the authenticated secure module, including a check, using the sensitive encryption security data of a public key infrastructure, on a digital signature certifying the origin and the integrity of configuration data to be loaded from an external loading server and a secure loading of the configuration data (30) from the external loading server through a communication network in case of a positive check on the digital signature, said loaded configuration data comprising encryption parameters of a public key infrastructure.

2. Method according to Claim 1, in which said embedded equipment item implements functionalities, and said secure processing operation (E114, E208) further comprises the secure loading, from the external loading server and using the encryption parameters contained in the loaded configuration data, operation data (30) which provide the embedded equipment item, when they are loaded, with said functionalities.

3. Method according to Claim 1, in which said authentication comprises exchanges of "challenge-response" type between the secure module and the embedded equipment item, and the secure module (40) and the embedded equipment item (10) share a first symmetrical encryption key (28, 48) used in the "challenge-response" type exchanges.

4. Method according to the preceding claim, in which the embedded equipment item (10) shares a second symmetrical encryption key (28', 48') with a second secure module (40'), and the method comprises a step of authentication (E162, E308) of the second secure module (40') with the embedded equipment item (10) using said second symmetrical key (28', 48').

5. Method according to the preceding claim, in which said first symmetrical key (28, 48) is stored in a rewriteable memory area of the embedded equipment item (10) and the method comprises, in case of positive authentication of the second module (40'), an update of said first symmetrical key (28, 48) by at least one datum (48') contained in the second secure module.

6. Method according to Claim 1, in which said authentication is conducted automatically, by said firmware, upon the detection of the connection with the secure module, and a positive authentication automatically triggers the secure loading of the configuration data.

7. Method according to Claim 6, in which, in case of positive authentication, said embedded equipment item reads the sensitive data from said secure module to perform the secure loading.

8. Method according to Claim 6, in which the security check on the loading of the data is performed by said secure module.

9. Method according to any one of the preceding claims, in which said sensitive encryption security data of a public key infrastructure comprise at least one certificate, a hashing algorithm and a signature algorithm.

10. Embedded equipment item (10) in an aircraft, the embedded equipment item comprising a certified hardware component and firmware (22) incorporated in the certified hardware component such that a modification of said firmware requires a new certification of the hardware component incorporating same, the firmware comprising binary instructions for implementing a secure processing operation and is capable of being executed when the embedded equipment item is started up to perform the secure processing operation (E114, E208) by the use of sensitive encryption security data (24) of a public key infrastructure, **characterized in that** the firmware (22) comprises means (28) capable of establishing an authentication-based connection with an external secure module (40) comprising said sensitive encryption security data (24) of a public key infrastructure necessary for said secure processing operation on the embedded equipment item so as to provide said firmware (22) with said sensitive encryption security data (24) of a public key infrastructure, and comprises execution means for executing, following the authentication, said secure processing operation using the sensitive encryption security data of a public key infrastructure obtained from the authenticated secure module, including a check, using the sensitive encryption security data of a public key infrastructure, on a digital signature certifying the origin and the integrity of configuration data to be loaded from an external loading server and a secure loading of the configuration data (30) from the external loading server through a communication network in case of a positive check on the digital signature, said loaded configuration data comprising encryption parameters of a public key infrastructure.

11. System comprising an embedded equipment item (10) according to the preceding claim and an external secure module (40) provided to be connected to said embedded equipment item (10), the secure module (40) comprising said sensitive encryption security data (24) of a public key infrastructure, stored in a memory space (44) that is only write protected, and means for authentication by symmetrical key (48), stored in a memory space (46) that is write and read protected.

12. Aircraft (50) comprising an equipment item according to Claim 10.
